# EUROPEAN PATENT APPLICATION

(11) **EP 2 740 595 A1**
(43) Date of publication of application: **11.06.2014**
(21) Application number: 11748538.3
(22) Date of filing: 27.07.2011
(51) Int. Cl.: B32B 23/08, B32B 15/08

(54) **METHOD FOR MAKING AND PROCESSING FLEXIBLE PLATE MATERIAL**

(71) Applicant: Shanghai Yi Hsin Industry Co., Ltd., Shanghai 201108 (CN)
(72) Inventor: HSU, Cheng chien, Shanghai 201108 (CN); HSU, Meng chien, Shanghai 201108 (CN)
(74) Representative: Szabo, Zsolt
(86) International application number: PCT/CN2011/077694
(87) International publication number: WO 2013/013400

(57) **Abstract**

A method for fabricating and processing a flexible substrate is provided, which mainly includes: providing at least one first medium of a flexible material; providing at least one second medium of a thermoplastic plastic material; binding the first medium and the second medium to form a sheet; and curing the sheet into a plate of a predetermined shape by hot pressing. In addition, the plate is subjected to secondary processing to form a secondary composite medium of another predetermined shape. Thereby, a predetermined shape of the plate is achieved by primary processing, and is in turn changed by secondary processing.

## Description

### BACKGROUND OF THE INVENTION

### Field of the Invention

The present invention relates to a fabricating and processing method, and more particularly to a method for fabricating and processing a flexible substrate, which reduces the processing time.

### Related Art

Products in the industries of aerospace, transportation, electronics, electrical machinery, medical treatment and construction have been widely used in modern life. With the increasing requirements for energy saving and light weight, there is an urgent need for use of flexible materials (such as carbon fibers). However, fabricating methods of currently available flexible materials are limited to thermoset molding and thermoplastic molding. Here, the carbon fiber is taken as an example for illustration.

In a conventional method for fabricating a thermosetting carbon fiber material, epoxy resin is used as a base, which is interwoven with a carbon fiber wire. In the fabricating process, wet soaking and binding is the main step (carbon fiber prepreg), so that during fabrication, epoxy resin covering the carbon fiber wire has to be air-dried first, to form a shaped plate that can be used in ordinary products.

For thermoplastic processing, plastic pellets are melted and used as thermoplastic carbon fiber pellets for injection molding, which are injection molded to form a shaped plate or shell that can be used in ordinary products.

However, as epoxy resin is used in the prior art, a long time is required for air-drying of epoxy resin covering the wire during thermoset molding. In addition, epoxy does not allow secondary processing, and can only be processed for once. Moreover, the thermoplastic processing cannot provide sufficient strength, easily causes floating fibers and increases the difficulty of subsequent processing operations.

Therefore, how to solve the above problems and defects of the prior art is a research subject of the inventor of the present invention and relevant manufacturers involved in the industry.

### SUMMARY OF THE INVENTION

Accordingly, the present invention is directed to a method for fabricating and processing a flexible substrate, which reduces the processing time and can achieve secondary processing.

In order to solve the above technical problems, the present invention provides a method for fabricating and processing a flexible substrate, which includes: (a) providing at least one first medium of a flexible material; (b) providing at least one second medium of a thermoplastic plastic material; (c) binding the first medium and the second medium to form a sheet; and (d) curing the sheet into a composite medium of a predetermined shape by hot pressing.

The present invention uses a second medium of a thermoplastic plastic material to solve the problem in the prior art that a long time is required for air-drying of epoxy resin, and uses a dry process to reduce the fabrication time, so that the processing time can be reduced by more than 90%.

A further improvement of the present invention lies in that, the composite medium is cured into a predetermined shape by secondary hot pressing. The present invention utilizes the plasticity of the second medium so that the substrate allows secondary processing, and is cured into a secondary composite medium of a predetermined shape (for example, shell or plate) by secondary hot pressing, thereby solving the problem of the fabricating technique in the prior art that epoxy resin does not allow secondary processing and the strength cannot be adjusted according to product requirements.

A further improvement of the present invention lies in that, the first medium is a carbon fiber, a non-woven fabric or a metal wire.

A further improvement of the present invention lies in that, the second medium is polyethylene terephthalate (PET), high density polyethylene (HDPE), polyvinyl chloride (PVC), low density polyethylene (LDPE), polypropylene (PP), polycarbonate (PC) or acrylonitrile-butadiene-styrene (ABS) resin.

A further improvement of the present invention lies in that, the first medium and the second medium are bound by interweaving, adhesion or lamination. It should be noted that, the first medium and the second medium may also be bound by a binding agent to form a sheet, and the binding agent is of the same material as the second medium, that is, polyethylene terephthalate (PET), high density polyethylene (HDPE), polyvinyl chloride (PVC), low density polyethylene (LDPE), polypropylene (PP), polycarbonate (PC) or acrylonitrile-butadiene-styrene (ABS) resin.

A further improvement of the present invention lies in that, the sheet is cured into a composite medium of a predetermined shape by hot stamping or hot rolling.

### BRIEF DESCRIPTION OF THE DRAWINGS

The present invention will become more fully understood from the detailed description given herein below for illustration only, and thus are not limitative of the present invention, and wherein:
FIG. 1 is a flow chart of a preferred embodiment of a fabricating and processing method according to the present invention; and
FIG. 2 is a flow chart of another preferred embodiment of the fabricating and processing method according to the present invention.

### DETAILED DESCRIPTION OF THE INVENTION

The present invention is described in further detail with reference to the accompanying drawings.

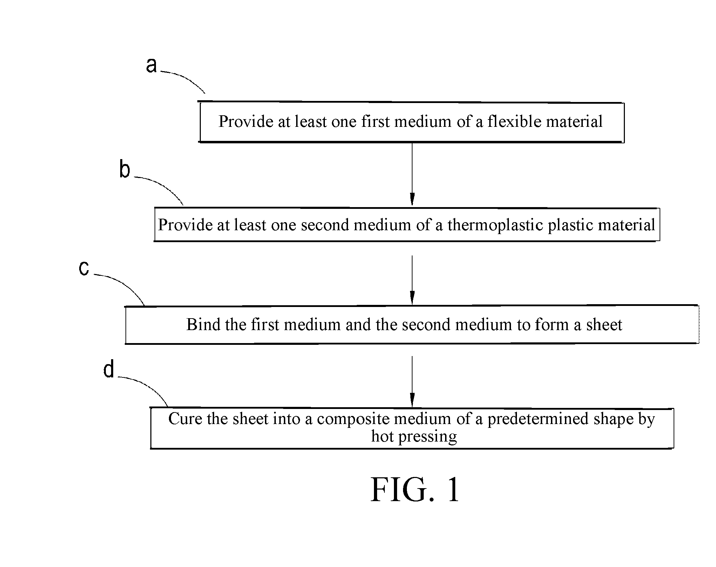

FIG. 1 is a flow chart of a preferred embodiment of a fabricating and processing method according to the present invention. Referring to FIG. 1, the method for fabricating and processing a flexible substrate according to the present invention includes:
(a) providing at least one first medium of a flexible material;
   where the flexible material may be a carbon fiber, a non-woven fabric or a metal wire;
(b) providing at least one second medium of a thermoplastic plastic material;
   where the thermoplastic plastic material may be polyethylene terephthalate (PET), high density polyethylene (HDPE), polyvinyl chloride (PVC), low density polyethylene (LDPE), polypropylene (PP), polycarbonate (PC) or acrylonitrile-butadiene-styrene (ABS) resin;
(c) binding the first medium and the second medium to form a sheet;
   where the first medium and the second medium may be bound by interweaving, adhesion or lamination, or may be bound by a binding agent to form a sheet, and the binding agent is of the same material as the second medium, that is, polyethylene terephthalate (PET), high density polyethylene (HDPE), polyvinyl chloride (PVC), low density polyethylene (LDPE), polypropylene (PP), polycarbonate (PC) or acrylonitrile-butadiene-styrene (ABS) resin; and
(d) curing the sheet into a composite medium of a predetermined shape by hot pressing.

The sheet may be cured into a composite medium of a predetermined shape by hot stamping or hot rolling. The composite medium is a shell or plate, and the strength of the shell or plate can be adjusted by changing the proportions of the first medium and the second medium and the process parameters according to product requirements.

The present invention uses a second medium of a thermoplastic plastic material to solve the problem in the prior art that a long time is required for air-drying of epoxy resin, and uses a dry process to reduce the fabrication time, so that the processing time can be reduced by more than 90%.

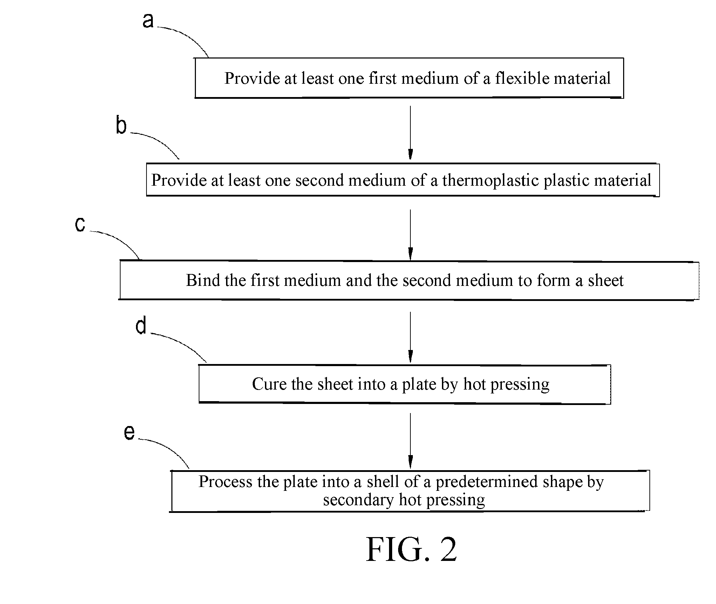

FIG. 2 is a flow chart of another preferred embodiment of the fabricating and processing method according to the present invention. Referring to FIG. 2, the difference between this embodiment and the above embodiment lies in that, the sheet formed by binding the first medium and the second medium is cured into a shell or plate by hot pressing, and then by utilizing the thermoplasticity of the second medium, the shell or plate is cured into a predetermined shaped by secondary hot pressing, thereby solving the problem of the fabricating technique in the prior art that epoxy resin does not allow secondary processing and the strength cannot be adjusted according to product requirements.

The above descriptions are merely preferred embodiments of the present invention, but are not intended to limit the scope of the present invention. Therefore, any modification or equivalent structural variation easily made based on the specification and accompanying drawings of the present invention shall fall within the scope of the present invention.

## Claims

1. A method for fabricating and processing a flexible substrate, comprising:
(a) providing at least one first medium of a flexible material;
(b) providing at least one second medium of a thermoplastic plastic material;
(c) binding the first medium and the second medium to form a sheet; and
(d) curing the sheet into a composite medium by hot pressing.

2. The method according to claim 1, wherein the composite medium is cured into a predetermined shape by secondary hot pressing.

3. The method according to claim 1, wherein the first medium is a carbon fiber, a non-woven fabric or a metal wire.

4. The method according to claim 1, wherein the second medium is polyethylene terephthalate (PET), high density polyethylene (HDPE), polyvinyl chloride (PVC), low density polyethylene (LDPE), polypropylene (PP), polycarbonate (PC) or acrylonitrile-butadiene-styrene (ABS) resin.

5. The method according to claim 1, wherein the first medium and the second medium are bound by interweaving, adhesion or lamination.

6. The method according to claim 1, wherein the sheet is cured into a composite medium by hot stamping or hot rolling.

7. The method according to claim 1, wherein the composite medium is a shell or plate.

8. A flexible substrate fabricated by the method according to any one of claims 1 to 7.
